# EUROPÄISCHE PATENTSCHRIFT

(11) **EP 3 895 872 B1**
(45) Veröffentlichungstag und Bekanntmachung des Hinweises auf die Patenterteilung: **08.11.2023**
(21) Anmeldenummer: 21167897.4
(22) Anmeldetag: 12.04.2021
(51) Int. Cl.: B29C 45/27, B29C 45/76, H05B 3/06, H05B 3/46, H05B 3/58

(54) **SPANNBARE ELEKTRISCHE HEIZVORRICHTUNG**
TENSIONABLE ELECTRIC HEATING DEVICE
DISPOSITIF DE CHAUFFAGE ÉLECTRIQUE EXTENSIBLE

(30) Priorität: 15.04.2020 DE 202020102066 U
(43) Veröffentlichungstag der Anmeldung: 20.10.2021
(73) Patentinhaber: Türk & Hillinger GmbH, 78532 Tuttlingen (DE)
(72) Erfinder: Schlipf, Andreas, 78532 Tuttlingen (DE)
(74) Vertreter: Westphal, Mussgnug & Partner Patentanwälte mbB

(56) Entgegenhaltungen:
- DE-U1-202015 102 778
- KR-B1- 101 032 573

## Beschreibung

Die Erfindung betrifft eine elektrische Heizvorrichtung mit den Merkmalen des Oberbegriffs des Schutzanspruchs 1.

Aus dem Stand der Technik bekannt sind Heizvorrichtungen mit einem elektrischen Heizelement, die auf einen zu beheizenden Körper aufgeschoben und dort durch Festspannen befestigt werden. Beispielsweise werden derartige Heizvorrichtungen bei Spritzgussmaschinen oder in Heißkanal- und Verteilersystemen als Düsenheizung zur Beheizung von Düsenkörpern verwendet.

Aus dem am Markt vorhandenen Stand der Technik ist es bereits bekannt, um das Heizelement herum einen mit dem Heizelement in direktem oder, z.B. wenn dieses zwischen einem inneren und einem äußeren Metallmantel eingebettet ist, in indirektem Kontakt stehenden, einstückigen Spannmantel vorzusehen, der in radialer Richtung betrachtet einander überlappende Abschnitte aufweist, zwischen denen ein mit einer Schraube betriebener Keilmechanismus angeordnet ist. Dreht man die Schraube in die eine Richtung, wird der Keilmechanismus so bewegt, dass sich seine Höhe ändert, was eine Abstandsvergrößerung der überlappenden Abschnitte des Spannmantels mit sich bringt, die wegen der im Wesentlichen konstanten Länge des Spannmantels zu einem Festspannen der Heizvorrichtung auf dem zu beheizenden Körper führt. Das Drehen der Schraube in die andere Richtung ermöglicht es, den Spannmantel wieder zu lösen.

Problematisch bei dieser Heizvorrichtung mit Spannmantel ist der bedingt durch den Keilmechanismus erhöhte Platzbedarf des Spannmechanismus in radialer Richtung, denn in vielen Fällen, insbesondere bei Heißkanaldüsen, sind die einzelnen zu beheizenden Düsen in Blöcken angeordnet und zwischen der Düse und dem Block ist lediglich ein relativ enger, rohrförmiger Kanal vorhanden, in den die Heizvorrichtung hinein passen muss.

Insbesondere für Anwendungen, bei denen ein solcher erhöhter Platzbedarf nicht befriedigt werden kann, sind Heizvorrichtungen entwickelt worden, wie sie beispielsweise in der DE 200 15 016 U1 oder der DE 20 2011 003 451 U1 offenbart sind. Bei diesen Heizvorrichtungen ist das Heizelement zwischen einem inneren und einem äußeren Metallmantel angeordnet und die Heizvorrichtung weist einen sie in axialer Richtung durchsetzenden Schlitz auf. Ferner sind Spannelemente vorgesehen, welche mit dem äußeren Metallmantel so wechselwirken, dass ihre Verschiebung in axialer Richtung die Breite des Schlitzes in Umfangsrichtung verändert und dadurch das Festspannen auf dem zu beheizenden Körper erreicht wird.

Ein großes Problem dieser Heizvorrichtungen ist die Bedienung der Spannelemente, die bei aufgeschobener Heizvorrichtung, z.B. in vielen Fällen innerhalb eines engen, rohrförmigen Kanals, der nur von einer Seite her zugänglich ist, erfolgen muss. Beispielsweise ist es kaum möglich, ein Spannelement wieder zu lösen. Ebenso problematisch ist es, bei Heizvorrichtungen, deren Länge es erforderlich macht, mehrere Spannvorrichtungen in axialer Richtung hintereinander anzuordnen, um einen hinreichend innigen Kontakt zwischen Heizvorrichtung und zu beheizendem Gegenstand zu gewährleisten, diese individuell spannbar zu gestalten.

Aus der DE 20 2025 102 778 U1 ist eine spannbare Heizvorrichtung mit den Merkmalen des Oberbegriffs des Anspruchs 1 bekannt. Eine weitere spannbare Heizvorrichtung offenbart die KR 101 032 573 B1.

Die Aufgabe der Erfindung besteht somit darin, eine spannbare Heizvorrichtung bereitzustellen, bei der eine bessere Bedienbarkeit des Spannelements gewährleistet ist. Diese Aufgabe wird gelöst durch eine Heizvorrichtung mit den Merkmalen des Patentanspruchs 1 oder mit den Merkmalen des Patentanspruchs 11. Vorteilhafte Weiterbildungen der Erfindung sind Gegenstand der Unteransprüche.

Die erfindungsgemäße elektrische Heizvorrichtung weist eine axiale Öffnung zur Aufnahme eines zu beheizenden Gegenstands, dessen Außenkontur vorzugsweise zylindrisch sein kann, ein - vorzugsweise die axiale Öffnung zumindest abschnittsweise umgebendes- elektrisches Heizelement und einen zylindermantelförmigen oder kegelstumpfmantelförmigenSpannmantel zum Erzeugen einer einstellbaren, radial in Richtung auf eine Achse der axialen Öffnung hin wirkenden Kraft auf.

Zu einem noch klareren Verständnis dieser an sich eindeutigen Terminologie sollen die folgenden Erläuterungen beitragen:
Die Geometrie einer solchen Heizvorrichtung kann insbesondere vorzugsweise unter Rückgriff auf Begriffe aus der Geometrie des Zylinders bzw. des verallgemeinerten Zylinders und Zylinderkoordinaten beschrieben werden. Die Richtung der Zylinderachse ist durch die Achse, die die axiale Öffnung der Heizvorrichtung, in welche der zu beheizende Gegenstand in der Regel eingeschoben wird, definiert, vorgegeben und wird nachfolgend als axiale Richtung bezeichnet.

Radial in Richtung auf diese Achse hin wirkt eine Kraft, wenn sie auf einer senkrecht zu dieser Achse stehenden Verbindungslinie zwischen einem Punkt des Zylindermantels und einem Punkt der Achse in Richtung auf die Achse hin wirkt und damit insbesondere geeignet ist, um die elektrischen Heizvorrichtung an einen in ihrer axialen Öffnung angeordneten zu beheizenden Gegenstand anzupressen.

Der Verlauf eines elektrischen Heizelements im Raum lässt sich insbesondere in diesen Zylinderkoordinaten, also durch die Position auf der Achse der axialen Öffnung, den Abstand in radialer Richtung von der Achse der axialen Öffnung und einen Polarwinkel zwischen 0° und 360° beschreiben. Das elektrische Heizelement umgibt die axiale Öffnung zumindest dann abschnittweise, wenn unterschiedliche Polarwinkel zur Beschreibung des Verlaufs des elektrischen Heizelements im Bereich der axialen Öffnung liegen. Insbesondere ist dies der Fall, wenn die der axialen Öffnung zugewandte Seite des elektrischen Heizelements auf einer gedachten Zylinder- oder Kegelstumpffläche liegt, die die axiale Öffnung -vorzugsweise koaxialumschließt, was wiederum insbesondere der Fall ist, wenn das elektrische Heizelement gewendelt oder mäandrierend auf einem gedachten Zylinder- bzw. Kegelstumpfmantel verläuft, wobei die Steigung in Richtung parallel zur Zylinder- bzw. Kegelstumpfachse variieren kann.

Erfindungsgemäß wird zumindest der Spannmantel der elektrischen Heizvorrichtung zumindest abschnittsweise durch eine Ausnehmung, die insbesondere als ein Schlitz ausgeführt sein kann, durchsetzt. Unter einer Ausnehmung ist also insbesondere auch eine Öffnung oder Durchbrechung zu verstehen; auch Gruppen von Öffnungen oder Durchbrechungen sind denkbar. Die Ausnehmung durchsetzt den Spannmantel zumindest abschnittsweise und muss sich daher nicht zwingend über dessen gesamte Länge hinweg erstrecken.

Dabei muss die Breite der Ausnehmung bzw. insbesondere des Schlitzes, die man als den Abstand voneinander im Wesentlichen senkrecht zur Achse der axialen Öffnung gegenüberliegenden Randpunkten der Ausnehmung, verstehen kann, mittels mindestens einer Spannvorrichtung veränderbar sein.

Eine alternative Beschreibung des Sachverhalts, dass die Breite der Ausnehmung mittels der Spannvorrichtung veränderbar ist, kann man wieder unter Rückgriff auf eine Beschreibung der Ausnehmung in Zylinderkoordinaten vornehmen: An jedem Punkt der Zylinderachse, an dem eine Ausnehmung vorhanden ist, überdeckt diese einen bestimmten Polarwinkelbereich. Wenn bei unterschiedlicher Stellung der Spannvorrichtung an solchen Punkten der Zylinderachse der von der Ausnehmung abgedeckte Polarwinkelbereich variiert, ist die Breite der Ausnehmung mittels der Spannvorrichtung veränderbar.

Erfindungswesentlich ist, dass mindestens eine Komponente der Spannvorrichtung relativ zum Spannmantel um eine senkrecht zu der Achse der axialen Öffnung stehende Achse entweder drehbar gelagert ist oder drehbar lagerbar ist, wobei diese Komponente direkt oder indirekt mit dem Spannmantel so zusammenwirkt, dass eine Drehung der drehbar gelagerten oder drehbar lagerbaren Komponente der Spannvorrichtung die Breite der Ausnehmung bzw. insbesondere die Breite des Schlitzes verändert.

Anzumerken ist insbesondere, dass der Spannmantel bei verschiedenen Ausführungsformen erfindungsgemäßer elektrischer Heizvorrichtungen einerseits als separates, zusätzliches Bauteil, andererseits aber auch durch unterschiedliche Komponenten der elektrischen Heizvorrichtung selbst realisiert sein kann.

Beispielsweise kann der Spannmantel bei elektrischen Heizvorrichtungen, bei denen das elektrische Heizelement in ein gut wärmeleitendes Pulver oder Granulat eingebettet ist, das den Innenraum zwischen einem rohrförmigen Innenmantel mit einer Ausführung, die als Schlitz gestaltet sein kann und einem üblicherweise konzentrisch dazu angeordneten rohrförmigen Außenmantel mit einer Ausnehmung, die als ein Schlitz gestaltet sein kann, die durch seitliche Begrenzungsflächen an den Rändern der Ausnehmungen bzw. der Schlitze miteinander verbunden sind, füllt, durch den rohrförmigen Außenmantel mit Ausnehmung bzw. Schlitz gebildet werden.

Bei Ausführungsformen, bei denen ein gewendeltes elektrisches Heizelement in Form einer Rohrwendelpatrone von einem rohrförmigen Außenmantel mit einer Ausnehmung, vorzugsweise in Form eines Schlitzes, umgeben ist, an dem es unmittelbar anliegt, kann ebenfalls dieser den Spannmantel bilden.

Und bei Ausführungsformen, bei denen eine Rohrwendelpatrone in eine in einer Metallfläche eingebrachten Nut eingelegt sind, wobei die Metallfläche eine Oberfläche eines vorzugsweise in Form eines -insbesondere geschlitzten- Rohrs vorliegenden Metallkörpers ist, wobei diese Form beispielsweise aus dem Vollen gearbeitet sein kann aber auch durch Aufrollen einer Metallplatte vor oder nach dem Einlegen der Rohrwendelpatrone hergestellt sein kann, kann dieser Metallkörper den Spannmantel bilden.

Anders als bei aus dem Stand der Technik bekannten Ausführungsformen, bei denen eine lineare Bewegung direkt eingeleitet wird, muss durch die erfindungsgemäße Ausgestaltung ein Werkzeugeingriff nur noch an einer Stelle erfolgen, die zudem ortsfest bleibt. Da die Drehung zudem auch nicht nur mit einem Spannwerkzeug initiiert werden kann das einen geraden Schaft aufweist, sondern auch mit einem abgewinkelten Spannwerkzeug, ist der Platzbedarf für die Bedienung einer derartigen Spannvorrichtung zudem extrem gering.

Bei einem ersten Typ einer Spannvorrichtung, der besonders einfach aufgebaut ist, ist die drehbar gelagerte oder drehbar lagerbare Komponente der Spannvorrichtung eine Scheibe mit Eingriffsmitteln, wobei die Eingriffsmittel mit direkt oder indirekt am Spannmantel angeordneten komplementären Eingriffsmitteln zusammenwirken.

Anzumerken ist, dass dieser Typ der Spannvorrichtung analog auch mit anderen geometrischen Formen als einer Kreisscheibe aufgebaut werden kann, beispielsweise einem Rechteck oder Quadrat.

Dabei ist zu beachten, dass der Unterschied zwischen Eingriffsmitteln und komplementären Eingriffsmitteln bei diesem Typ in dem Ort besteht, an dem sie angeordnet sind und nicht darin besteht, ob es sich um einen Vorsprung oder eine Aufnahme für einen solchen Vorsprung handelt. Die Eingriffsmittel sind immer an der Scheibe zu finden; die komplementären Eingriffsmittel am Spannmantel.

Durch das Zusammenwirken der Eingriffsmittel und der komplementären Eingriffsmittel wird die Möglichkeit geschaffen, auf den Spannmantel eine Kraft auszuüben, die auf eine Verringerung der Breite der Ausnehmung, insbesondere des Schlitzes, wirkt und dadurch die elektrische Heizvorrichtung auf den zu beheizenden Gegenstand aufspannt.

In einer ersten Alternative können dementsprechend die Eingriffsmittel Vorsprünge, die beispielsweise stiftförmig, quaderförmig oder gekrümmt ausgeführt sein können, und die komplementären Eingriffsmittel Vertiefungen, insbesondere Aussparungen, Nuten, oder Durchbrechungen sein, während in einer zweiten Alternative die komplementären Eingriffsmittel Vorsprünge und die Eingriffsmittel Vertiefungen, insbesondere Aussparungen, Nuten oder Durchbrechungen, sind.

Vorteilhaft ist es dabei, wenn die Vorsprünge, unabhängig davon, ob es sich um Eingriffsmittel oder komplementäre Eingriffsmittel handelt, durch an der Scheibe befestigte Bauteile oder am Spannmantel befestigte Bauteile gebildet sind, also nicht einstückig mit der Scheibe oder dem Spannmantel verbunden ausgeführt sind. Dies kann zu einem besonders einfachen Zusammenbau der Spannvorrichtung wesentlich beitragen.

Dies gilt insbesondere dann, wenn die Vorsprünge und die Vertiefungen zumindest abschnittsweise in einem Hinterschnitt miteinander in Kontakt stehen, so dass die Scheibe fixiert ist.

Allgemein werden die Vorsprünge bei der Bewegung der Scheibe an einem seitlichen Rand der Vertiefung, der zumindest abschnittsweise der Ausnehmung zugewandt ist, entlang geführt. Da die Position der an der Scheibe angeordneten Eingriffsmittel fest vorgegeben ist, wird dabei eine Änderung des Abstands der Punkte oder Bereiche, an denen Eingriffsmittel und komplementäre Eingriffsmittel jeweils aktuell miteinander in Kontakt stehen in eine Änderung der Breite der Ausnehmung im Spannmantel umgesetzt. Wenn die Vertiefungen bzw. die Ränder, an denen die Vorsprünge anliegen bzw. mit denen sie wechselwirken, gekrümmt verlaufen, kann die Bewegung der Scheibe besonders glatt verlaufen. Insbesondere ist dies der Fall, wenn die Krümmung der Vertiefungen variiert.

Besondere Flexibilität hinsichtlich der Ausgestaltung und eine einfache Herstellung für die Vertiefungen kann dadurch erreicht werden, dass diese die am Spannmantel angeordneten komplementären Eingriffsmittel bilden und in einem separaten, am Spannmantel fixierten Teil, das demzufolge nicht einstückig mit dem Spannmantel verbunden ist, verlaufen.

Um die Drehbewegung besonders einfach einleiten zu können, ist es vorteilhaft, wenn die Spannvorrichtung eine Werkzeugaufnahme aufweist, die auf der Drehachse der drehbar gelagerten Komponente der Spannvorrichtung liegt. Beispielsweise kann eine solche Werkzeugaufnahme ein Schlitz oder Kreuzschlitz zur Aufnahme eines Schraubendrehers, oder eine quadratische, sechseckige oder sternförmigen Ausnehmung zur Aufnahme eines Vierkantschlüssels, eines Imbus-Schlüssels oder eines Sternschlüssels sein.

Um den erforderlichen Bauraum gering zu halten ist es vorteilhaft, wenn der Spannmantel eine Vertiefung aufweist, in der die Spannvorrichtung zumindest abschnittsweise angeordnet ist.

Bei einem zweiten Typ einer Spannvorrichtung ist vorgesehen, dass die am Spannmantel angeordneten komplementären Eingriffsmittel die Ausnehmung, die insbesondere als Schlitz ausgestaltet sein kann, überbrücken, auf der einen Seite der Ausnehmung ein erstes Ende aufweisen, das mit dem Spannmantel verbunden ist und auf der anderen Seite der Ausnehmung ein zweites Ende aufweisen, das in die Scheibe eingreift oder in das die Scheibe eingreift.

Während bei dem ersten, oben diskutierten Typ der Spannvorrichtung die Scheibe die Ausnehmung bzw. gegebenenfalls deren spezielle Ausgestaltung als Schlitz überbrückt, wird dies bei dem zweiten Typ durch das komplementäre Eingriffsmittel geleistet, das dementsprechend bei diesem Typ nicht allein durch einen Vorsprung oder eine Ausnehmung am Spannmantel gebildet ist, sondern beispielsweise durch eine bandförmige, die Ausnmehmung überbrückende Struktur, die an dem mit der Scheibe wechselwirkenden Ende z.B. einen Vorsprung oder eine Vertiefung aufweist, mit der ein an der Scheibe vorgesehenes Eingriffsmittel, z.B. in Form einer Vertiefung oder eines Vorsprungs, in Eingriff gebracht ist oder mittelbar, z.B. über einen an diesem Ende angeordneten Stift, während an dem gegenüberliegenden Ende der die Ausnehmung überbrückenden Struktur eine Verbindung zum Spannmantel hergestellt ist, was beispielsweise ebenfalls durch ein Einhaken eines abgeknickten Endes der den Spannmantel überbrückenden Struktur in eine Vertiefung im Spannmantel erfolgen kann.

Bei einem dritter Typ einer Spannvorrichtung einer erfindungsgemäßen elektrischen Heizvorrichtung weist der Spannmantel ein Lager auf, das eine senkrecht zu der Achse der axialen Öffnung stehende Drehachse definiert, so dass eine Komponente der Spannvorrichtung, die an ihrem Umfang eine Zahnstruktur aufweist, in dem Lager drehbar lagerbar ist. Ferner weist der Spannmantel ein komplementäres Eingriffsmittel auf, dessen Abstand von der Ausnehmung bzw, wenn die Ausnehmung als solcher ausgeführt ist von dem Schlitz von seinem einen Ende hin zu seinem anderen Ende wächst.

Zu der Spannvorrichtung gehört ferner ein Spannschieber, wobei der Spannschieber
- ein Eingriffsmittel, das im Eingriff mit dem Eingriffsmittel des Spannmantels steht,
- eine parallel zur Achse der axialen Öffnung verlaufende Öffnung, die mindestens einen parallel zur Achse der axialen Öffnung verlaufenden Rand mit einer zu der Zahnstruktur komplementären Zahnstruktur aufweist, und das Lager freilegt,
- die Ausnehmung überbrückt, und
- auf der dem Eingriffsmittel gegenüberliegenden Seite der Ausnehmung mit dem Spannmantel in Kontakt steht oder in Kontakt gebracht werden kann.

Als Konsequenz der Anordnung ergibt sich, dass, wenn die Komponente der Spannvorrichtung, die an ihrem Umfang eine Zahnstruktur aufweist, in dem Lager drehbar gelagert ist und gedreht wird durch das Zusammenwirken der Zahnstruktur mit der komplementären Zahnstruktur der Spannschieber axial verschoben und dadurch zumindest auf einem Teil des axialen Verschiebewegs die Breite der Ausnehmung geändert wird.

Insbesondere besteht bei diesem dritten Typ der Spannvorrichtung die Möglichkeit, dass die Komponente der Spannvorrichtung, die an ihrem Umfang die Zahnstruktur aufweist, nicht permanent an der elektrischen Heizvorrichtung angeordnet ist, sondern nur dann, wenn eine Änderung der Spannwirkung herbeigeführt werden soll. Insbesondere kann die Komponente der Spannvorrichtung, die an ihrem Umfang die Zahnstruktur aufweist, also durch ein Werkzeug gebildet werden, das im vielleicht einfachsten Fall einfach ein Sternschlüssel ist.

Die Erfindung wird nachfolgende anhand von Figuren, die Ausführungsbeispiele zeigen, näher erläutert. Es zeigen:
- Fig.1a:: Eine Explosionsdarstellung einer ersten elektrischen Heizvorrichtung mit einer Spannvorrichtung gemäß einem ersten Typ,
- Fig.1b:: eine Außenansicht der zusammengesetzten elektrischen Heizvorrichtung aus Figur 1a,
- Fig.1c:: eine Querschnittsdarstellung eines Details der Spannvorrichtung aus Figur 1b,
- Fig.1d:: eine vergrößerte Darstellung der Komponenten der Spannvorrichtung der elektrischen Heizvorrichtung aus Figur 1a,
- Fig.1e:: die Komponenten einer ersten Variante einer Spannvorrichtung des ersten Typs,
- Fig.2:: eine Veranschaulichung der Wirkungsweise einer Spannvorrichtung des ersten Typs anhand einer zweiten Variante einer solchen Spannvorrichtung
- Fig.3a:: eine Möglichkeit zur Montage einer Spannvorrichtung des ersten Typs anhand einer dritten Variante einer solchen Spannvorrichtung,
- Fig.3b:: einen Querschnitt durch die montierte Spannvorrichtung aus Figur 3a,
- Fig.4a:: eine Außenansicht einer zweiten Ausführungsform einer elektrischen Heizvorrichtung mit einer vierten Variante einer Spannvorrichtung des ersten Typs,
- Fig.4b:: einen vergrößerten Querschnitt durch die Spannvorrichtung gemäß Fig. 4a,
- Fig.5a:: eine Außenansicht einer dritten Ausführungsform einer elektrischen Heizvorrichtung mit einer fünften Variante einer Spannvorrichtung des ersten Typs,
- Fig.5b:: einen vergrößerten Querschnitt durch die Spannvorrichtung gemäß Fig. 5a,
- Fig.6a:: eine Explosionsdarstellung einer vierten Ausführungsform einer elektrischen Heizvorrichtung mit einer Spannvorrichtung gemäß einem zweiten Typ,
- Fig.6b:: eine Außenansicht der zusammengesetzten elektrischen Heizvorrichtung aus Figur 6a,
- Fig.6c:: eine Querschnittsdarstellung eines Details der Spannvorrichtung aus Figur 6b,
- Fig.6d:: eine vergrößerte Darstellung der Spannvorrichtung aus Figur 6b in entspanntem Zustand,
- Fig.6e:: eine vergrößerte Darstellung der Spannvorrichtung aus Figur 6e in gespanntem Zustand,
- Fig.7a:: eine Außenansicht einer fünften Ausführungsform einer elektrischen Heizvorrichtung mit einer Spannvorrichtung gemäß einem dritten Typ, mit einem von der elektrischen Heizvorrichtung abgezogenen Spannwerkzeug,
- Fig.7b:: eine Außenansicht der elektrischen Heizvorrichtung aus Figur 7a in einem Zustand, in dem das Spannwerkzeug eingesetzt ist,
- Fig.7c:: eine vergrößerte Darstellung der Spannvorrichtung aus Figur 7b in entspanntem Zustand,
- Fig.7d:: eine vergrößerte Darstellung der Spannvorrichtung aus Figur 7c in gespanntem Zustand.
- Fig.8a:: eine Spannvorrichtung mit einer ersten Variante einer Ausnehmung,
- Fig.8b:: eine Spannvorrichtung mit einer zweiten Variante einer Ausnehmung,
- Fig.8c:: eine Spannvorrichtung mit einer dritten Variante einer Ausnehmung,
- Fig.8d:: eine Spannvorrichtung mit einer vierten Variante einer Ausnehmung, und
- Fig.8e:: eine Spannvorrichtung mit einer fünften Variante einer Ausnehmung.

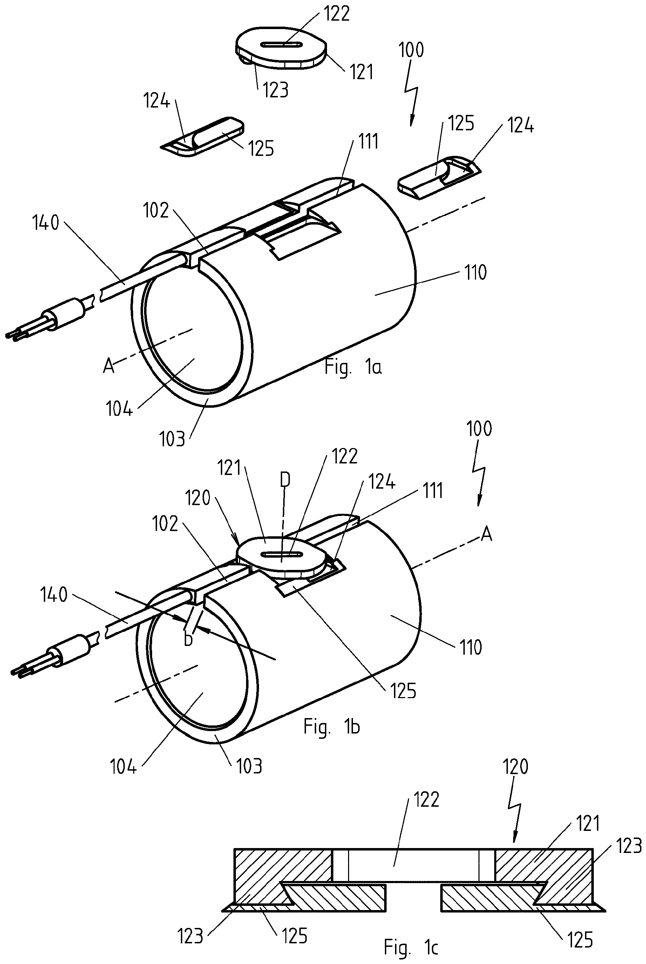

Figur 1a zeigt eine Explosionsdarstellung und Figur 1b eine Außenansicht einer ersten elektrischen Heizvorrichtung 100 mit einer Spannvorrichtung 120 gemäß einem ersten Typ. Dabei sind die Anschlussleitungen, mit denen die elektrische Heizvorrichtung 100 mit Strom versorgt wird, mit dem Bezugszeichen 140 versehen.

Die elektrische Heizvorrichtung 100 hat im Wesentlichen die Form eines Hohlzylinders mit einem den Hohlzylinder längs seiner durch die Zylinderachse, die die Achse A der axialen Öffnung des Hohlzylinders bildet, vorgegebenen Verlaufsrichtung durchsetzenden Schlitz, der die Ausnehmung 111 bildet. Die elektrische Heizvorrichtung 100 weist einen Spannmantel 110 auf, der zugleich den Außenmantel des Hohlzylinders bildet, der über seitliche Begrenzungsflächen 102 des die Ausnehmung 111 bildenden Schlitzes sowie deckel- und bodenseitige Begrenzungsflächen 103 mit dem Innenmantel 104 des Hohlzylinders verbunden sind. Im durch diese Mantel- bzw. Begrenzungsflächen definierten Innenraum ist das in den Figuren nicht sichtbare elektrische Heizelement, eingebettet in ein gut wärmeleitendes Pulver- oder Granulat und elektrisch isoliert von den Mantel- bzw. Begrenzungsflächen angeordnet.

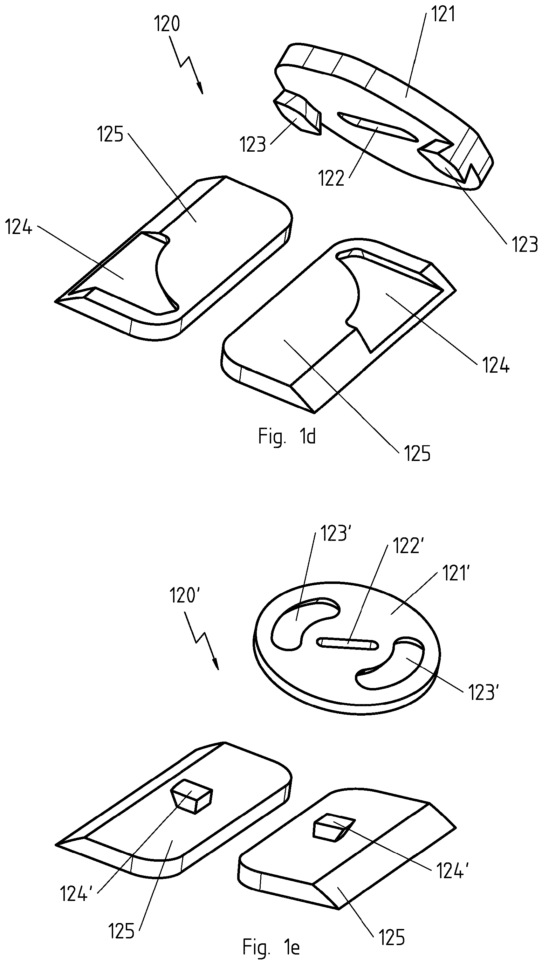

Die Spannvorrichtung 120, deren Einzelteile besonders gut in Figur 1d zu erkennen sind, weist eine Scheibe 121 auf, in die ein Werkzeugaufnahme 122, der hier für einen Schraubendreher ausgelegt ist, eingebracht ist und die um die senkrecht auf der Zylinderachse A stehende Drehachse D herum drehbar gelagert ist. An der Scheibe 121 sind Eingriffsmittel 123 vorgesehen, die sich von ihren von der Scheiben 121 abgewandten Enden in Richtung auf die Scheibe 121 hin verjüngen. Die zugehörigen komplementären Eingriffsmittel 124 sind in Einschubstücke 125 eingebrachte Ausnehmungen, deren Wandschräge an die Verjüngung der Eingriffsmittel 123 angepasst ist, so dass ein Hinterschnitt entsteht, der in der Querschnittsdarstellung der Figur 1c gut zu erkennen ist und die Scheibe 121 festlegt. Die Einschubstücke 125 sind jeweils bis zu einem Anschlag 113 in eine korrespondierende Vertiefung 119 des Spannmantels 110 eingeschoben und werden dort durch Vorsprünge 112 fixiert.

Dreht man die Scheibe 121 ausgehend von der in Figur 1b dargestellten geöffneten Startposition im Uhrzeigersinn, so gleiten die Eingriffsmittel 123 am Wandabschnitt 126 der Ausnehmungen entlang, der aber schwächer gekrümmt ist als ein Kreisbogen, dessen Radius dem Abstand zwischen Drehachse D und der Startposition der Eingriffsmittel 123 entspricht. Dementsprechend wird auf die Einschubstücke 125 eine Kraft ausgeübt, die sie aufeinander zubewegt und über den Anschlag 113 auf den Spannmantel 110 übertragen; die Breite b des Schlitzes, der die Ausnehmung 111 bildet, wird kleiner.

Die in Figur 1e gezeigte Variante einer Spannvorrichtung 120', die demselben Typ zuzurechnen ist, unterscheidet sich im Wesentlichen darin, dass die an den Einschubstücken 125' vorgesehenen komplementären Eingriffsmittel 124' als Vorsprünge ausgeführt sind, während die an der Scheibe 121' vorgesehenen Eingriffsmittel 123' als einander punktsymmetrisch zur Drehachse D gegenüberliegende, nierenförmige Öffnungen mit einer Krümmung, die geringer ist als die Krümmung eines Kreisbogens, dessen Radius dem Abstand zwischen Drehachse D und der Startposition der komplementären Eingriffsmittel 124' entspricht, ausgeführt sind. Dementsprechend ist der Abstand zwischen den punktsymmetrisch zueinander liegenden Endbereichen der Eingriffsmittel 123'größer als der Abstand zwischen deren Mitten, so dass die Drehung der Scheibe 121' eine Änderung der Breite der Ausnehmung 111' erzwingt.

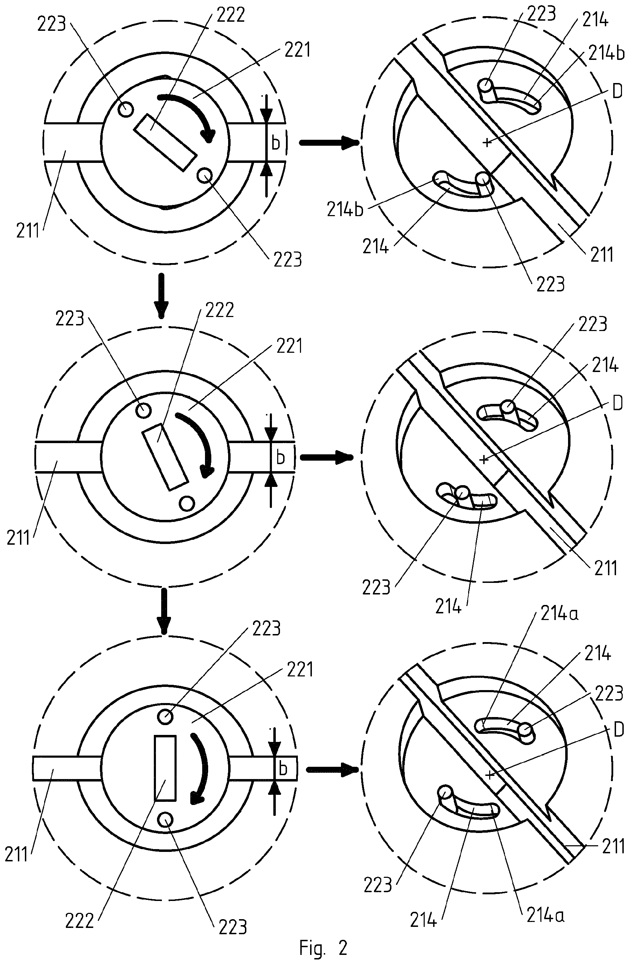

Anhand der Figur 2 lässt sich die Wirkungsweise einer Spannvorrichtung des ersten Typs anhand einer zweiten Variante einer solchen Spannvorrichtung 220 mit einer Scheibe 221 mit Werkzeugaufnahme 222 und als mit der Scheibe 221 verbundenen Stiften ausgeführten Eingriffsmitteln 223 noch einmal veranschaulichen. Dabei sind von oben nach unten drei unterschiedliche Einstellungen der Spannvorrichtung 220 gezeigt, und zwar jeweils in der linken Spalte von oben betrachtet und in der rechten Seite von unten betrachtet.

Die komplementären Eingriffsmittel 214, in die die Stifte eingreifen, sind hier gekrümmte Schlitze im Spannmantel 210, die auf unterschiedlichen Seiten einer den Spannmantel 210 durchsetzenden Ausnehmung 211, die als Schlitz ausgeführt ist, und punktsymmetrisch zur Drehachse D der Scheibe 221 verlaufen, und zwar so, dass der Abstand zwischen ihren der als Schlitz ausgeführten Ausnehmung 211 näher liegenden Endbereichen 214a geringer ist als der zwischen ihren von der als Schlitz ausgeführten Ausnehmung 211 weiter weg liegenden Endbereichen 214b. Gleiten nun als Folge der Drehbewegung der Scheibe 221 die Stifte vom Endbereich 214a der komplementären Eingriffsmittel 214 in Richtung auf den Endbereich 214b, so wird die Breite b des Schlitzes 211 reduziert und dadurch eine Spannkraft ausgeübt.

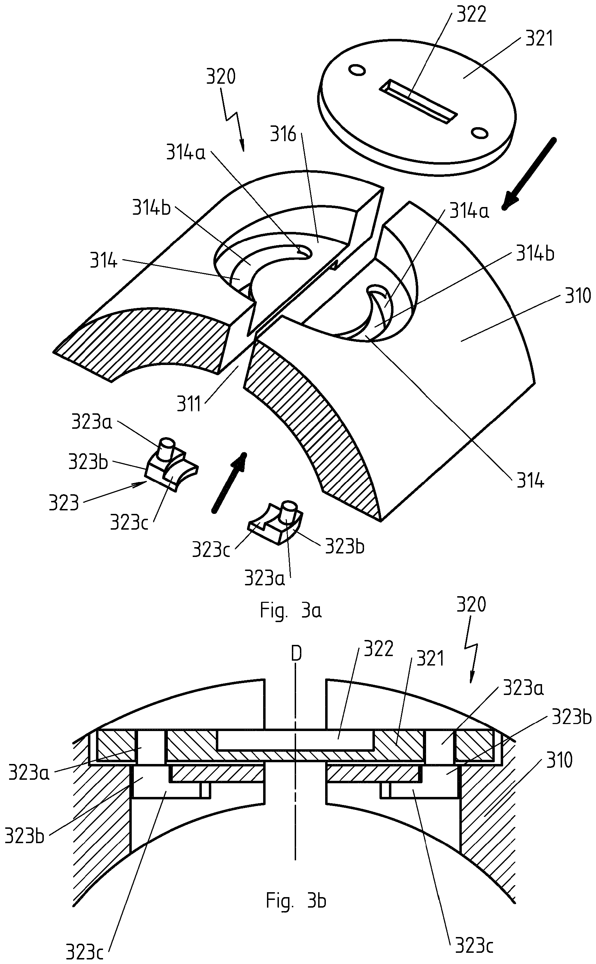

Die Spannvorrichtung 310 vom ersten Typ, die in den Figuren 3a und 3b gezeigt ist, ist ein Beispiel mit einem Aufbau, der für einen sehr einfachen Zusammenbau der Spannvorrichtung 310 sorgt. Die komplementären Eingriffsmittel 314, sind auch hier gekrümmte Schlitze im Spannmantel 310, die auf unterschiedlichen Seiten einer den Spannmantel 310 durchsetzenden, as Schlitz ausgeführten Ausnehmung 311 und punktsymmetrisch zur Drehachse D der Scheibe 321 verlaufen, und zwar so, dass der Abstand zwischen ihren der als Schlitz ausgeführten Ausnehmung 311 näher liegenden Endbereichen 314a geringer ist als der zwischen ihren von der als Schlitz ausgeführten Ausnehmung 311 weiter weg liegenden Mittelabschnitten 314b. Sie liegen allerdings in einer in den Spannmantel 310 eingebrachten Vertiefung 319 zur Aufnahme der Scheibe 321, so dass die Spannvorrichtung 310 den Durchmesser einer mit ihr ausgestatteten elektrischen Heizvorrichtung nicht erhöht.

Die Eingriffsmittel 323 weisen hier eine in etwa L-förmige Form auf, wobei der senkrechte Balken des L durch einen stabförmigen Befestigungsabschnitt 323a und einen Durchführungsabschnitt 323b gebildet wird und der waagerechte Balken des L durch einen vorspringenden Abschnitt 323c. Nach dem Einlegen der Scheibe 321 in die Vertiefung 319 werden die Eingriffsmittel 323 von der Innenseite des Spannmantels 310 her jeweils durch die als Schlitze ausgeführten komplementären Eingriffsmittel 314 so hindurchgeführt, dass der vorspringende Abschnitt 323c einen Rand des Schlitzes hintergreift und der Durchführungsabschnitt 323b den Schlitz durchsetzt, während der Befestigungsabschnitt 323a in Befestigungsöffnungen 325, die in der Scheibe angeordnet sind, eingreift. Anschließend muss nur noch der Befestigungsabschnitt 323a an der Scheibe 321 befestigt werden.

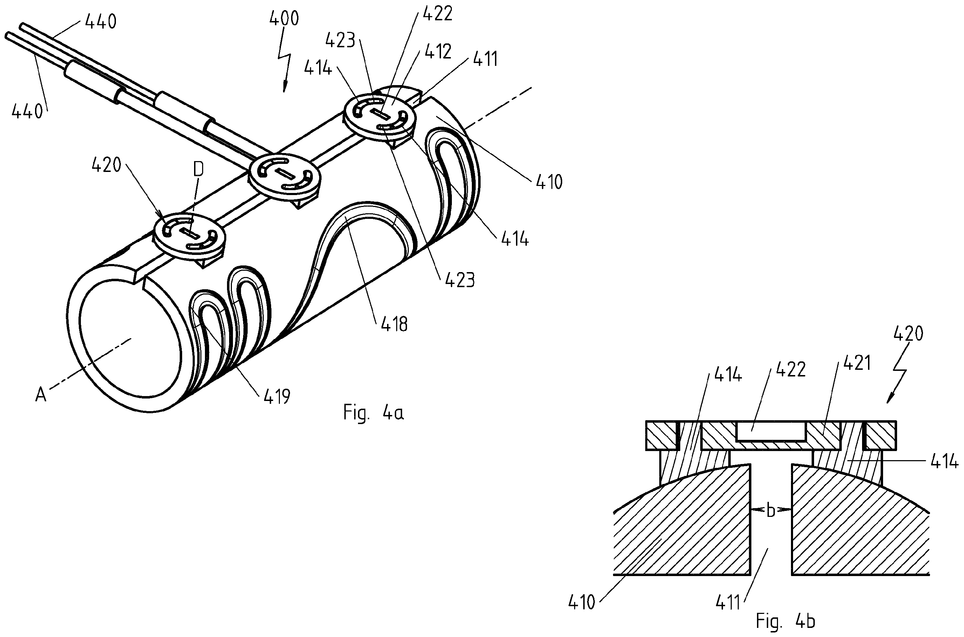

Figur 4a zeigt eine Außenansicht einer zweiten elektrischen Heizvorrichtung 400 mit einem Spannmantel 410, einer als Schlitz realisierten Ausnehmung 411 und drei Spannvorrichtungen 420. Im Spannmantel 410 ist eine Nut 419 eingebracht, in die eine elektrische Rohrwendelpatrone als elektrisches Heizelement 418 eingebracht ist.

Die Spannvorrichtungen 420 mit Scheibe 421, Werkzeugaufnahme 422, Eingriffsmittel 423 und komplementärem Eingriffsmittel 414 sind gemäß einer weiteren Variante des ersten Typs ausgeführt, die, wie man in Zusammenschau mit der Querschnittsdarstellung dieser Spannvorrichtung 420 in Figur 4b leicht erkennt, im Wesentlichen dem Aufbau der Spannvorrichtung 120' gemäß Figur 1e entspricht; dementsprechend ergeben sich die Bezugszeichen aus denen der Figur 1e durch Weglassung des 'und Addition von 300. Der Unterschied ist, dass die komplementären Eingriffsmittel 414 auf den Spannmantel 410 aufgesetzt und nicht in diesen eingeschoben sind.

Dabei sind in Figur 4a auch die Anschlussleitungen 440, mit denen die elektrische Heizvorrichtung 400 mit Strom versorgt wird, dargestellt.

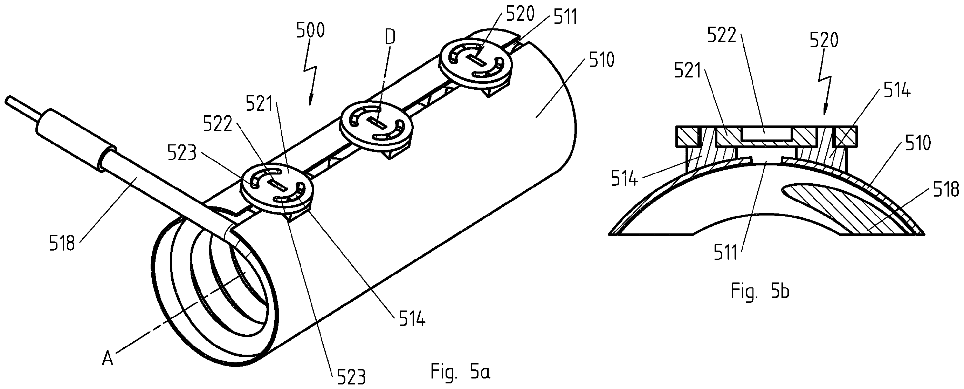

Figur 5a zeigt eine Außenansicht einer dritten elektrischen Heizvorrichtung 500 mit einem Spannmantel 510, eine als Schlitz ausgeführte Ausnehmung 511 und drei Spannvorrichtungen 520. Der Spannmantel 510 umgibt das als eine aufgewendelte elektrische Rohrwendelpatrone ausgeführte elektrische Heizelement 518.

Die Spannvorrichtungen 520 mit Scheibe 521, Werkzeugaufnahme 522, Eingriffsmittel 523 und komplementärem Eingriffsmittel 514 sind, wie man in Zusammenschau mit der Querschnittsdarstellung der Spannvorrichtung 520 in Figur 5b leicht erkennt, identisch zu den oben diskutierten Spannvorrichtungen ausgeführt; ihre Bezugszeichen ergeben sich aus denen der Figuren 4a und 4b durch Addition von 100.

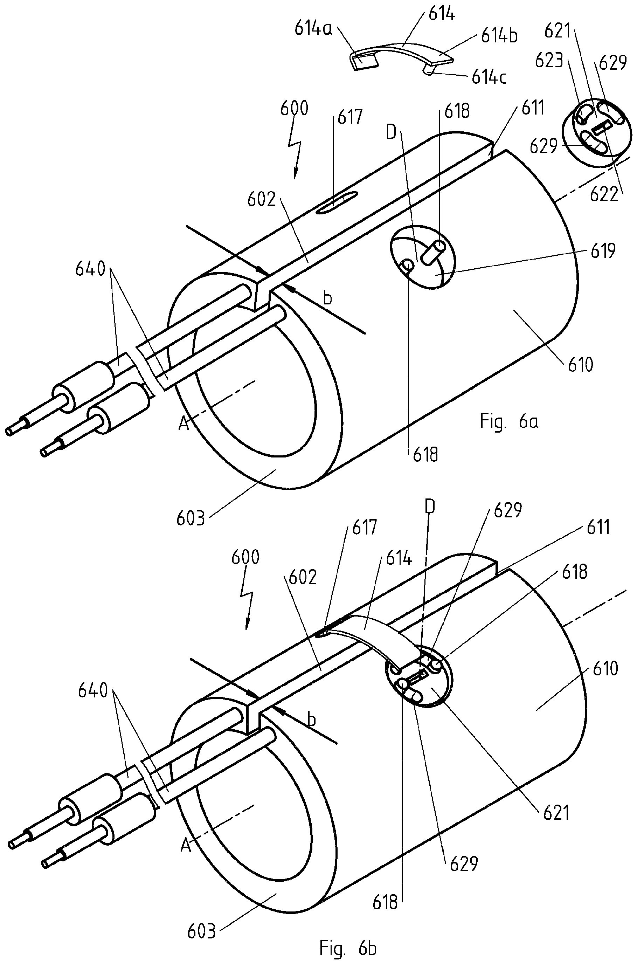

Figur 6a zeigt eine Explosionsdarstellung und Figur 6b eine Außenansicht einer weiteren elektrischen Heizvorrichtung 600 mit einer Spannvorrichtung 620 gemäß einem zweiten Typ. Dabei sind die Anschlussleitungen, mit denen die elektrische Heizvorrichtung 600 mit Strom versorgt wird, mit dem Bezugszeichen 640 versehen.

Die elektrische Heizvorrichtung 600 hat im Wesentlichen die Form eines Hohlzylinders mit einem den Hohlzylinder längs seiner durch die Zylinderachse, die die Achse A der axialen Öffnung des Hohlzylinders bildet, vorgegebenen Verlaufsrichtung durchsetzenden, ebenfalls als Schlitz ausgeführten Ausnehmung 611. Die elektrische Heizvorrichtung 600 weist einen Spannmantel 610 auf, der zugleich den Außenmantel des Hohlzylinders bildet, der über seitliche Begrenzungsflächen 602 der als Schlize ausgeführten Ausnehmmung 611 sowie deckel- und bodenseitige Begrenzungsflächen 603 mit dem Innenmantel des Hohlzylinders verbunden sind. Im durch diese Mantel- bzw. Begrenzungsflächen definierten Innenraum ist das in den Figuren nicht sichtbare elektrische Heizelement, eingebettet in ein gut wärmeleitendes Pulver- oder Granulat und elektrisch isoliert von den Mantel- bzw. Begrenzungsflächen angeordnet.

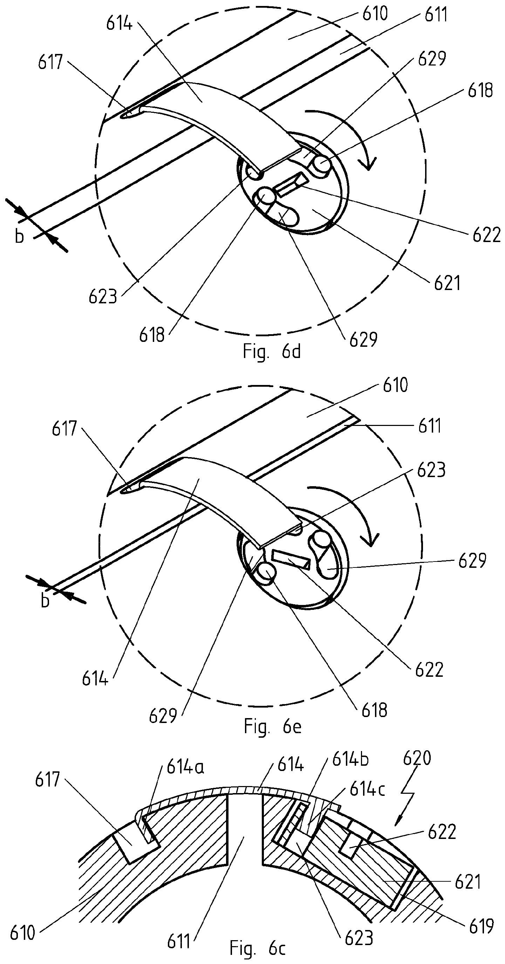

Die Spannvorrichtung 620, deren Einzelteile besonders gut in der Explosionsdarstellung der Figur 6a und der Querschnittsdarstellung der Figur 6c zu erkennen sind, weist eine Scheibe 621 auf, in die eine Werkzeugaufnahme 622, der hier für einen Schraubendreher ausgelegt ist, eingebracht ist und die um die senkrecht auf der Zylinderachse A stehende Drehachse D herum drehbar gelagert ist. Für diese Lagerung ist im Spannmantel 610 eine Vertiefung 619 angeordnet, in der zwei Führungsstifte 618 punktsymmetrisch zur Drehachse D angeordnet sind. Die Scheibe weist zwei kreisbogenförmige Durchbrechungen 629 auf, welche ebenfalls punktsymmetrisch zur Drehachse D angeordnet sind, deren Abstand voneinander dem Abstand der Führungsstifte 618 spricht und die so dimensioniert sind, dass die Führungsstifte 618 in den Durchbrechungen 629 geführt werden und ist in der Vertiefung 619 mit in den Durchbrechungen 629 gelagerten Führungsstiften 618 angeordnet.

Darüber hinaus weist die Scheibe 621 auf ihrer der als Schlitz ausgeführten Ausnehmung 611 zugewandten Seite ein Eingriffsmittel 623 auf, das hier als ein gekrümmter Schlitz ausgeführt ist, dessen Abstand zum Rand der Scheibe 621 von seinem einen Ende zu seinem anderen Ende kontinuierlich zunimmt. Als Konsequenz dieses Aufbaus ändert sich bei einer Drehung der Scheibe 621 um die Drehachse D, bei der die Führungsstifte 618 in den Durchbrechungen 629 geführt werden, der Abstand des nächsten Punkts des gekrümmten Schlitzes des Eingriffsmittels 623 von der als Schlitz ausgeführten Ausnehmung 611.

Das komplementäre Eingriffsmittel 614 ist hier ein Metallstreifen, der die als Schlitz realisierte Ausnehmung 611 überbrückt. Das abgewinkelte erste Ende 614a dieses Metallstreifens ist mit dem Spannmantel 610 verbunden, indem es in eine Öffnung 617 eingreift. Das auf der anderen Seite der als Schlitz ausgeführten Ausnehmung 611 angeordnete zweite Ende 614b dieses Metallstreifens weist einen Stift 614c auf, der in das Eingriffsmittel 623 der Scheibe 621, also den gekrümmten Schlitz eingreift.

Wie man besonders gut in den Figuren 6d und 6e sieht, wird dadurch, dass bei der Drehung der Scheibe 621 -wie oben bereits erläutert- der Abstand des Punktes des gekrümmten Schlitzes, der das Eingriffsmittel 623 bildet, von der als Schlitz ausgeführten Ausnehmung 611 verändert wird, auch die Position des Stifts 614c von der Ausnehmung 611 verändert und die entstehende Zugwirkung über den Metallstreifen, der das komplementäre Eingriffsmittel 614 bildet, auf die andere Seite der als Schlitz ausgeführten Ausnehmung 611 übertragen, was zu einer Verkleinerung der Breite b der Ausnehmung 611 führt.

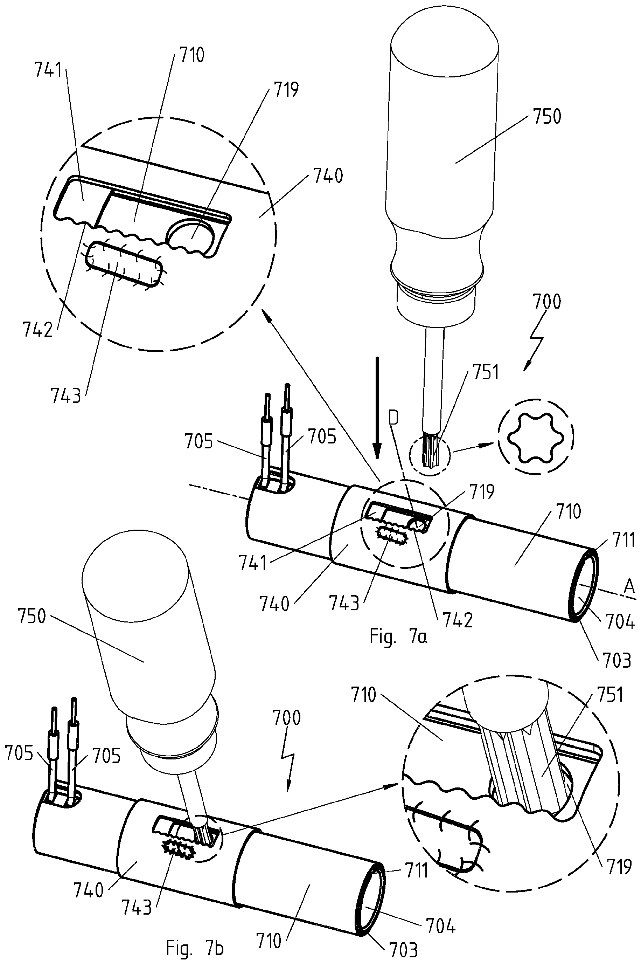

Die Figuren 7a bis 7d zeigen eine fünfte Ausführungsform einer elektrischen Heizvorrichtung 700 mit einer Spannvorrichtung 720 gemäß einem dritten Typ.

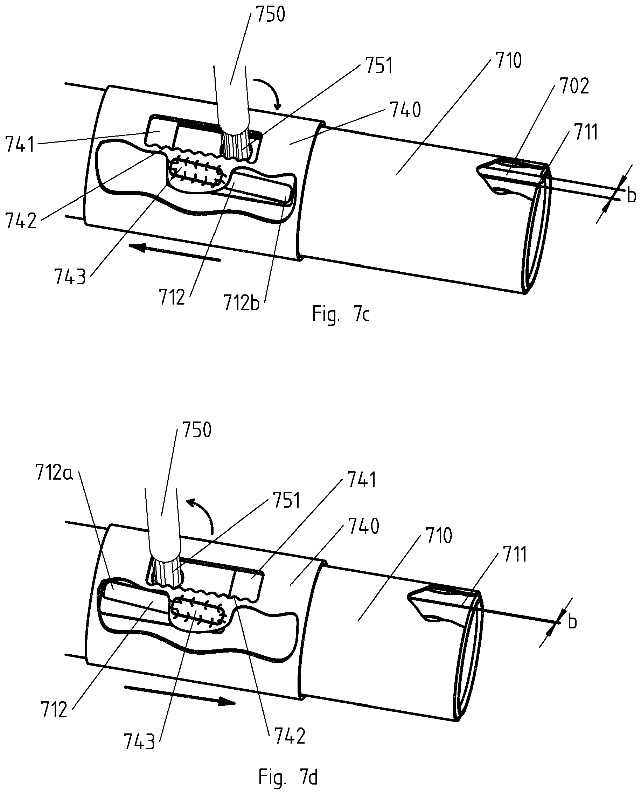

Die elektrische Heizvorrichtung 700 hat im Wesentlichen die Form eines Hohlzylinders mit einer den Hohlzylinder längs seiner durch die Zylinderachse, die die Achse A der axialen Öffnung des Hohlzylinders bildet, vorgegebenen Verlaufsrichtung durchsetzenden, als Schlitz ausgeführten Ausnehmung 701. Die elektrische Heizvorrichtung 700 ist grundsätzlich ähnlich wie die elektrische Heizvorrichtung 100, die in den Figuren 1a und 1b gezeigt ist, auf: Sie hat einen Außenmantel der zugleich den Spannmantel 710 bildet, der über seitliche Begrenzungsflächen 702 der Ausnehmung 711 sowie deckel- und bodenseitige Begrenzungsflächen 703 mit dem Innenmantel 704 des Hohlzylinders verbunden sind. Im durch diese Mantel- bzw. Begrenzungsflächen definierten Innenraum ist das elektrische Heizelement 718, von dem in Figur 7 a und 7b die Endabschnitte erkennbar sind, eingebettet in ein gut wärmeleitendes Pulver- oder Granulat und elektrisch isoliert von den Mantel- bzw. Begrenzungsflächen angeordnet.

Bei diesem dritter Typ einer Spannvorrichtung 720 weist der Spannmantel 710 ein Lager 719 auf, das eine senkrecht zu der Zylinderachse A des Hohlzylinders stehende Drehachse D definiert, so dass eine Komponente 750 der Spannvorrichtung 720, die an ihrem Umfang eine Zahnstruktur 751 aufweist, in dem Lager 719 drehbar lagerbar ist. Ferner weist der Spannmantel 710 ein komplementäres Eingriffsmittel 714 auf, das in der teilweise geöffneten Darstellung der Figuren 7c und 7d besonders gut erkennbar ist und hier als eine Vertiefung im Außenmantel der elektrischen Heizvorrichtung 700 ausgeführt ist, deren Abstand von der als Schlitz ausgeführten Ausnehmung 711 von ihrem ersten Ende 714a, das in Figur 7d erkennbar und in Figur 7c verdeckt ist, hin zu ihrem zweiten Ende 714b, das in Figur 7c erkennbar und in Figur 7d verdeckt ist, wächst.

Zu der Spannvorrichtung 720 gehört ferner ein Spannschieber 740. Der Spannschieber 740 hat ein Eingriffsmittel 743, das hier durch einen nachträglich eingeschweißten Vorsprung, der in der Vertiefung geführt ist, gebildet wird und das somit im Eingriff mit dem komplementären Eingriffsmittel 712 des Spannmantels 710 steht. Der Spannschieber 740 hat ferner eine parallel zur Achse A der axialen Öffnung verlaufende Öffnung 741, die mindestens einen parallel zur Achse A der axialen Öffnung verlaufenden Rand mit einer zu der Zahnstruktur 751 komplementären Zahnstruktur 742 aufweist, und das Lager 719 freilegt.

Noch weiter überbrückt der Spannschieber 740 die als Schlitz ausgeführte Ausnehmung 711. Da er hülsenförmig ausgelegt und an den Spannmantel 710 im entspannten Zustand angepasst ist, steht er auf der dem Eingriffsmittel 743 gegenüberliegenden Seite der Ausnehmung 711 mit dem Spannmantel 710 in Kontakt oder kann zumindest beim Spannvorgang mit dem Spannmantel 710 in Kontakt gebracht werden.

Als Konsequenz dieser Anordnung ergibt sich, dass, wenn die Komponente 750 der Spannvorrichtung 720, die an ihrem Umfang eine Zahnstruktur 751 aufweist, in dem Lager 719 drehbar gelagert ist und gedreht wird, wie dies in den Figuren 7c und 7d angedeutet ist, durch das Zusammenwirken der Zahnstruktur 751 mit der komplementären Zahnstruktur 742 der Spannschieber 740 axial verschoben und dadurch zumindest auf einem Teil des axialen Verschiebewegs die Breite b der als Schlitz ausgeführten Ausnehmung 711 geändert wird.

Insbesondere besteht bei diesem dritten Typ der Spannvorrichtung 720 die Möglichkeit, dass die Komponente 750 der Spannvorrichtung 720, die an ihrem Umfang die Zahnstruktur 751 aufweist, nicht permanent an der elektrischen Heizvorrichtung 700 angeordnet ist, sondern nur dann, wenn eine Änderung der Spannwirkung herbeigeführt werden soll. Insbesondere kann die Komponente 750 der Spannvorrichtung 720, die an ihrem Umfang die Zahnstruktur 751 aufweist, also durch ein Werkzeug gebildet werden, das im vielleicht einfachsten Fall, wie er in den Figuren 7a bis 7d gezeigt ist einfach ein Sternschlüssel ist.

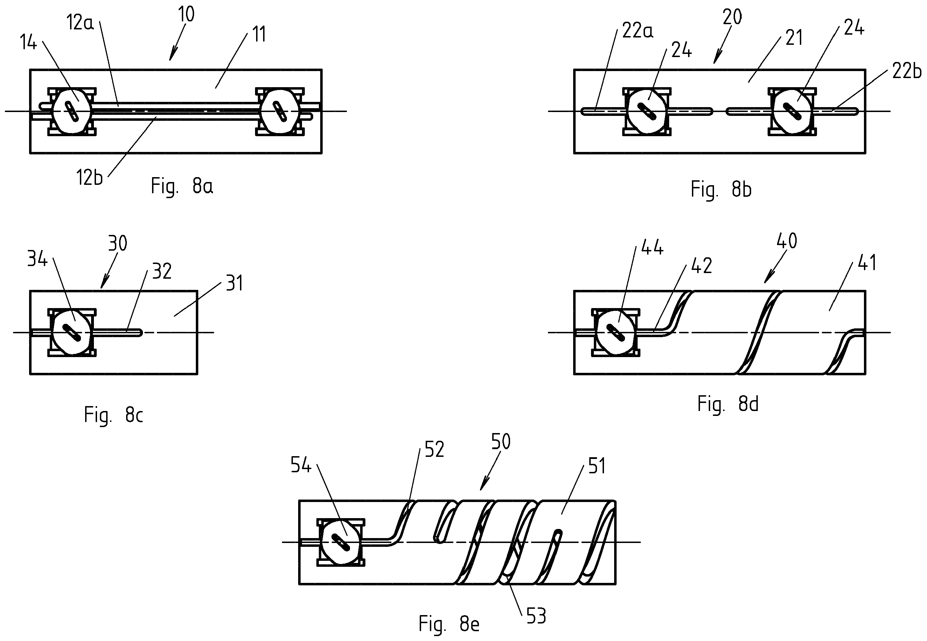

Die in den Figuren 8a bis 8e dargestellten Spannvorrichtungen 10,20,30,40,50 mit Spannmantel 11,21,31,41,51 und Scheiben 14,24,34,44,54 sollen exemplarisch einige der unterschiedlichen Formen verdeutlichen, die die Ausnehmungen 12a,12b,22a, 22b,32,42,52 im Sinne dieser Offenbarung haben können. Zu betonen ist dabei, dass zwar in den hier dargestellten Varianten stets die Breite der Ausnehmungen im Vergleich zu ihrer Länge relativ gering ist, dies aber nicht zwingend erforderlich ist.

Konkret sind bei der Spannvorrichtung 10 gemäß Figur 8a zwei Ausnehmungen 12a,12b vorgesehen, welche weitgehend parallel zueinander verlaufen, aber von einander gegenüberliegenden Enden der Spannvorrichtung 10 ausgehen und kurz vor dem jeweils anderen Ende der Spannvorrichtung 10 enden.

Auch bei der Spannvorrichtung 20 gemäß Figur 8b sind zwei Ausnehmungen 22a,22b vorhanden, die kollinear angeordnet sind, aber beide nicht von Enden des Spannmantels 21 ausgehen, sondern durch zwei separate Öffnungen im Spannmantel 21 gebildet werden.

Bei der in Figur 8c gezeigten Spannvorrichtung 30 ist nur eine Ausnehmung 32 vorhanden, die von einem Ende des Spannmantels 31 ausgeht und sich lediglich bis knapp über die Mitte der Spannvorrichtung 30 hinaus erstreckt.

Wie das Beispiel der Spannvorrichtung 40, die in Figur 8d gezeigt ist, kann die Ausnehmung 42 aber auch einen Abschnitt aufweisen, der sich spiralförmig um einen Abschnitt des Spannmantels 41 herumwindet.

Gemäß dem Beispiel der Figur 8e ist zusätzlich zu der in den Spannmantel 51 eingebrachten, im Wesentlichen gleich zur Ausnehmung 42 ausgeführten Ausnehmung 52 noch eine zweite, etwas breiter ausgeführte Ausnehmung 53 vorhanden ist.

### Bezugszeichenliste

- 10,20,30,40,50: Spannvorrichtung
- 11,21,31,41,51: Spannmantel
- 12a,12b,22a,22b,32,42,52,53: Ausnehmung
- 14,24,34,44,54: Scheibe
- 100,400,500,600,700: elektrische Heizvorrichtung
- 102,103,602,603,702,703: Begrenzungsflächen
- 104,604,704: Innenmantel
- 110,210,310,410,510,610,710: Spannmantel
- 111,211,311,411,511,611,711: Ausnehmung
- 112: Vorsprung
- 113: Anschlag
- 124,124',214,314,414,514,614,714: komplementäres Eingriffsmittel
- 119,319,619: Vertiefung
- 120,120',220,320,420,520,620,720: Spannvorrichtung
- 121,121',221,321,421,521,621: Scheibe
- 122,122',222,322,422,522,622: Werkzeugaufnahme
- 123,123',223,323,423,523,623,743: Eingriffsmittel
- 125,125': Einschubstücke
- 126: Wandabschnitt
- 140,440,640: Anschlussleitung
- 214a,214b,314a,314b: Endbereich
- 323a: Befestigungsabschnitt
- 323b: Durchführungsabschnitt
- 323c: vorspringender Abschnitt
- 418,518,718: elektrisches Heizelement
- 419: Nut
- 614a,714a: erstes Ende
- 614b,714b: zweites Ende
- 614c: Stift
- 618: Führungsstift
- 629: Durchbrechung
- 719: Lager
- 740: Spannschieber
- 741: Öffnung
- 742: komplementäre Zahnstruktur
- 750: Komponente
- 751: Zahnstruktur
- A: Achse
- D: Drehachse
- b: Breite

## Patentansprüche

1. Elektrische Heizvorrichtung (100,400,500,600,700) mit einer axialen Öffnung zur Aufnahme eines zu beheizenden Gegenstands, mit einem elektrischen Heizelement (418,518,718) und mit einem zylindermantelförmigen oder kegelstumpfförmigen Spannmantel (110,210,310, 410,510,610,710) zum Erzeugen einer einstellbaren, radial in Richtung auf eine Achse (A) der axialen Öffnung hin wirkenden Kraft, wobei zumindest der Spannmantel (110,210,310,410,510,610,710) der elektrischen Heizvorrichtung (100,400,500,600,700) von mindestens einer Ausnehmung (111,211,311,411,511,611,711) durchsetzt wird, deren Breite (b) mittels mindestens einer Spannvorrichtung (120, 220,320,420,520,620,720) veränderbar ist, wobei mindestens eine Komponente der Spannvorrichtung (120,220,320, 420,520,620,720) relativ zum Spannmantel (110,210,310,410, 510,610,710) um eine senkrecht zu der Achse (A) der axialen Öffnung stehende Drehachse (D) entweder drehbar gelagert ist oder drehbar lagerbar ist, wobei diese Komponente direkt oder indirekt mit dem Spannmantel (110,210,310,410, 510,610,710) so zusammenwirkt, dass eine Drehung der drehbar gelagerten oder drehbar lagerbaren Komponente der Spannvorrichtung (120,220,320,420,520,620,720) die Breite (b) der Ausnehmung (111,211,311,411,511,611,711) verändert, **dadurch gekennzeichnet, dass** die drehbar gelagerte oder drehbar lagerbare Komponente der Spannvorrichtung (120,220,320,420,520,620) eine Scheibe (121,221,321,421,521,621) mit mindestens einem Eingriffsmittel (123,223,323,423,523,623) ist, wobei die Eingriffsmittel (123,223,323,423,523,623) mit mindestens einem am Spannmantel (110,210,310,410,50,610) angeordneten komplementären Eingriffsmittel (124, 214,314,414,514,614) zusammenwirken.

2. Elektrische Heizvorrichtung (100,400,500,600,700) nach Anspruch 1,
**dadurch gekennzeichnet, dass** entweder in einer ersten Alternative die Eingriffsmittel (123,223,323,423,523,623) Vorsprünge und die komplementären Eingriffsmittel (124, 214,314,414,514,614) Vertiefungen, insbesondere Nuten, Ausnehmungen oder Durchbrechungen sind oder dass in einer zweiten Alternative die komplementären Eingriffsmittel (124, 214,314,414,514,614) Vorsprünge und die Eingriffsmittel (123,223,323,423,523,623) Vertiefungen, insbesondere Nuten oder Durchbrechungen, sind.

3. Elektrische Heizvorrichtung (100,400,500,600,700) nach Anspruch2,
**dadurch gekennzeichnet, dass** die Vorsprünge durch an der Scheibe (121,221,321,421,21,621) befestigte Bauteile oder am Spannmantel (110,210,310,410, 510,610) befestigte Bauteile gebildet sind.

4. Elektrische Heizvorrichtung (100,400,500,600,700) nach Anspruch 2 oder 3,
**dadurch gekennzeichnet, dass** die Vorsprünge und die Vertiefungen zumindest abschnittsweise mit einem Hinterschnitt miteinander in Kontakt stehen, so dass die Scheibe (121,221,321,421,521,621) fixiert ist.

5. Elektrische Heizvorrichtung (100,400,500,600,700) nach einem der Ansprüche 2 bis 4,
**dadurch gekennzeichnet, dass** die Vertiefungen gekrümmt verlaufen.

6. Elektrische Heizvorrichtung (100,400,500,600,700) nach Anspruch 5,
**dadurch gekennzeichnet, dass** die Krümmung der Vertiefungen variiert.

7. Elektrische Heizvorrichtung (100,400,500,600,700) nach einem der Ansprüche 2 bis 6,
**dadurch gekennzeichnet, dass** die Vertiefungen die am Spannmantel (110,210,310,410,510,610) angeordneten komplementären Eingriffsmittel (124, 214,314, 414,514,614) bilden und in einem separaten, am Spannmantel (110,210,310,410,510,610) fixierten Teil verlaufen.

8. Elektrische Heizvorrichtung (100,400,500,600) nach einem der Ansprüche 1 bis 7,
**dadurch gekennzeichnet, dass** die Spannvorrichtung (120,220,320,420,520,620) eine Werkzeugaufnahme (122,222,322,422,522,622) aufweist, die auf der Drehachse (D) der drehbar gelagerten Komponente der Spannvorrichtung (120,220, 320,420,520,620,720) liegt.

9. Elektrische Heizvorrichtung (100,300,600) nach einem der Ansprüche 1 bis 8,
**dadurch gekennzeichnet, dass** der Spannmantel (110,310,610) eine Vertiefung (119,310,619) aufweist, in der die Spannvorrichtung (120,320,620) zumindest abschnittsweise angeordnet ist.

10. Elektrische Heizvorrichtung (600) nach Anspruch1,
**dadurch gekennzeichnet, dass** die am Spannmantel (610) angeordneten komplementären Eingriffsmittel (614) die Ausnehmung (611) überbrücken, auf der einen Seite der Ausnehmung (611) ein erstes Ende (614a) aufweisen, das mit dem Spannmantel (610) verbunden ist und auf der anderen Seite der Ausnehmung (611) ein zweites Ende (614b) aufweisen, das mittelbar oder unmittelbar in die Scheibe (621) eingreift oder in das die Scheibe (621) eingreift.

11. Elektrische Heizvorrichtung (100,400,500,600,700) mit einer axialen Öffnung zur Aufnahme eines zu beheizenden Gegenstands, mit einem elektrischen Heizelement (418,518,718) und mit einem zylindermantelförmigen oder kegelstumpfförmigen Spannmantel (110,210,310, 410,510,610,710) zum Erzeugen einer einstellbaren, radial in Richtung auf eine Achse (A) der axialen Öffnung hin wirkenden Kraft, wobei zumindest der Spannmantel (110,210,310,410,510,610,710) der elektrischen Heizvorrichtung (100,400,500,600,700) von mindestens einer Ausnehmung (111,211,311,411,511,611,711) durchsetzt wird, deren Breite (b) mittels mindestens einer Spannvorrichtung (120, 220,320,420,520,620,720) veränderbar ist, wobei mindestens eine Komponente der Spannvorrichtung (120,220,320, 420,520,620,720) relativ zum Spannmantel (110,210,310,410, 510,610,710) um eine senkrecht zu der Achse (A) der axialen Öffnung stehende Drehachse (D) entweder drehbar gelagert ist oder drehbar lagerbar ist, wobei diese Komponente direkt oder indirekt mit dem Spannmantel (110,210,310,410, 510,610,710) so zusammenwirkt, dass eine Drehung der drehbar gelagerten oder drehbar lagerbaren Komponente der Spannvorrichtung (120,220,320,420,520,620,720) die Breite (b) der Ausnehmung (111,211,311,411,511,611,711) verändert,
**dadurch gekennzeichnet, dass** der Spannmantel (710) ein Lager (719) aufweist, das eine senkrecht zu der Achse (A) der axialen Öffnung stehende Drehachse (D) definiert, so dass eine Komponente (750) der Spannvorrichtung (720), die an ihrem Umfang eine Zahnstruktur (751) aufweist, in dem Lager (719) drehbar lagerbar ist, dass der Spannmantel (710) ferner ein komplementäres Eingriffsmittel (712) aufweist, dessen Abstand von der Ausnehmung von seinem ersten Ende (712a) hin zu seinem zweiten Ende (712b) wächst und dass die Spannvorrichtung (720) ferner einen Spannschieber (740) aufweist, wobei der Spannschieber (740)
- ein Eingriffsmittel(743) hat, das im Eingriff mit dem komplementären Eingriffsmittel (712) des Spannmantels (710) steht,
- eine parallel zur Achse (A) der axialen Öffnung verlaufende Öffnung (741) hat, die mindestens einen parallel zur Achse (A) der axialen Öffnung verlaufenden Rand mit einer zu der Zahnstruktur (751) komplementären Zahnstruktur (741) aufweist, und das Lager (719) freilegt, so dass die Komponente (750) im Lager (719) angeordnet sein oder angeordnet werden kann
- die Ausnehmung (711) überbrückt, und
- auf der dem komplementären Eingriffsmittel (712) gegenüberliegenden Seite der Ausnehmung (711) mit dem Spannmantel (710) in Kontakt steht oder in Kontakt gebracht werden kann,
so dass, wenn die Komponente (750) der Spannvorrichtung (720), die an ihrem Umfang die Zahnstruktur (751) aufweist, in dem Lager (719) drehbar gelagert ist und gedreht wird durch das Zusammenwirken der Zahnstruktur (751) mit der komplementären Zahnstruktur (741) der Spannschieber (740) axial verschoben und dadurch zumindest auf einem Teil des axialen Verschiebewegs die Breite (b) der Ausnehmung (711) geändert wird.

## Claims

1. Electric heating apparatus (100, 400, 500, 600, 700) having an axial opening for receiving an object intended for heating, with an electric heating element (418, 518, 718) and with a cylindrical sleeve-shaped or a frustoconical clamping jacket (110, 210, 310, 410, 510, 610, 710) for generating an adjustable force which acts radially towards an axis (A) of the axial opening, wherein at least the clamping jacket (110, 210, 310, 410, 510, 610, 710) of the electric heating apparatus (100, 400, 500, 600, 700) is traversed by at least one aperture (111, 211, 311, 411, 511, 611, 711), the width (b) of which can be changed by means of at least one clamping device (120, 220, 320, 420, 520, 620, 720), wherein at least one component of the clamping device (120, 220, 320, 420, 520, 620, 720) is either rotatably mounted, or rotatably mountable, relative to the clamping jacket (110, 210, 310, 410, 510, 610, 710), around an axis of rotation (D) extending vertically to the axis (A) of the axial opening, wherein these components interact directly or indirectly with the clamping jacket (110, 210, 310, 410, 510, 610, 710) such that a rotation of the rotatably mounted or rotatably mountable components of the clamping device (120, 220, 320, 420, 520, 620, 720) changes the width (b) of the aperture (111, 211, 311, 411, 511, 611, 711),
**characterized in that** the rotatably mounted or rotatably mountable components of the clamping device (120, 220, 320, 420, 520, 620, 720) is a disc (121, 221, 321, 421, 521, 621) having at least one engagement means (123, 223, 323, 423, 523, 623), wherein the engagement means (123, 223, 323, 423, 523, 623) interacts with at least one complementary engagement means (124, 214, 314, 414, 514, 614) arranged on the clamping jacket (110, 210, 310, 410, 510, 610).

2. Electrical heating device (100, 400, 500, 600, 700) in accordance with claim 1,
**characterized in that** either, in a first alternative, the engagement means (123, 223, 323, 423, 523, 623) have protrusions and the complementary engagement means (124, 214, 314, 414, 514, 614) are recesses, in particular grooves, apertures or perforations, or **in that**, in a second alternative, complementary engagement means (124, 214, 314, 414, 514, 614) have protrusions and the engagement means (123, 223, 323, 423, 523, 623) are recesses, in particular grooves or perforations.

3. Electrical heating device (100, 400, 500, 600, 700) in accordance with claim 2,
**characterized in that** the protrusions are formed by a component attached to the disc (121, 221, 321, 421, 521, 621) or by components attached to the clamping jacket (110, 210, 310, 410, 510, 610).

4. Electrical heating device (100, 400, 500, 600, 700) in accordance with claim 2 or 3,
**characterized in that** the protrusions and the recesses are at least partially in contact with each other with an undercut such that the disc (121, 221, 321, 421, 521, 621) is fixated.

5. Electrical heating device (100, 400, 500, 600, 700) in accordance with any of claims 2 to 4,
**characterized in that** the recesses extend arcuately.

6. Electrical heating device (100, 400, 500, 600, 700) in accordance with claim 5,
**characterized in that** the bending of the recess varies.

7. Electrical heating device (100, 400, 500, 600, 700) in accordance with any of claims 2 to 6,
**characterized in that** the recesses form the complementary engagement means (124, 214, 314, 414, 514, 614) arranged on the clamping jacket (110, 210, 310, 410, 510, 610) and extend in a separate part which is permanently attached to the clamping jacket (110, 210, 310, 410, 510, 610).

8. Electrical heating device (100, 400, 500, 600, 700) in accordance with any of claims 2 to 7,
**characterized in that** the clamping device (120, 220, 320, 420, 520, 620) comprises a tool holder (122, 222, 322, 422, 522, 622) which lies on the axis of rotation (D) of the rotatably mounted components of the clamping device (120, 220, 320, 420, 520, 620, 720).

9. Electrical heating device (100, 400, 500, 600, 700) in accordance with any of claims 2 to 8,
**characterized in that** the clamping jacket (110, 310, 610) comprises a recession (119, 310, 619) in which the clamping device (120, 320, 620) is at least partially arranged.

10. Electrical heating device (600) in accordance with claim 1,
**characterized in that** the complementary engagement means (614) arranged on the clamping jacket (610) bridge the recess (611), **in that** they comprise a first end (614a) on one side of the recess (611) and **in that** they comprise a second end (614b) on the other side of the recess (611) which directly or indirectly engages with the disc (621) or with which the disc (621) engages.

11. Electric heating apparatus (100, 400, 500, 600, 700) having an axial opening for receiving an object intended for heating, with an electric heating element (418, 518, 718) and with a cylindrical sleeve-shaped or a frustoconical clamping jacket (110, 210, 310, 410, 510, 610, 710) for generating an adjustable force which acts radially towards an axis (A) of the axial opening, wherein at least the clamping jacket (110, 210, 310, 410, 510, 610, 710) of the electric heating apparatus (100, 400, 500, 600, 700) is traversed by at least one aperture (111, 211, 311, 411, 511, 611, 711), the width of which (b) can be changed by means of at least one clamping device (120, 220, 320, 420, 520, 620, 720), wherein at least one component of the clamping device (120, 220, 320, 420, 520, 620, 720) is either rotatably mounted, or rotatably mountable, relative to the clamping jacket (110, 210, 310, 410, 510, 610, 710), around an axis of rotation (D) extending vertically to the axis (A) of the axial opening, wherein this component interacts directly or indirectly with the clamping jacket (110, 210, 310, 410, 510, 610, 710) such that a rotation of the rotatably mounted or rotatably mountable components of the clamping device (120, 220, 320, 420, 520, 620, 720) changes the width (b) of the aperture (111, 211, 311, 411, 511, 611, 711),
**characterized in that** the clamping jacket (710) comprises a bearing (719), which defines an axis of rotation (D) extending vertically to the axis (A) of the axial opening such that a component (750) of the clamping device (720), which comprises a toothed structure (751) on its periphery, is rotatably mounted in the bearing (719), **in that** the clamping jacket (710) further comprises a complementary engagement means (712), the distance of which to the aperture grows from its first end (712a) to its second end (712b) and **in that** the clamping device (720) further comprises a clamping slide (740), wherein the clamping slide (740) comprises
- an engagement means (743) which engages with the complementary engagement means (712) of the clamping jacket (710),
- an opening (741), extending parallel to the axis (A) of the axial opening, which comprises at least one edge, extending parallel to the axis (A) of the axial opening, with a complementary toothed structure (741) to the toothed structure (751), and which exposes the bearing (719) such that the components (750) in the bearing (719) are arranged or can be arranged
- bridges the recess (711), and
- is in or can be brought into contact with the clamping jacket /710) at the side which is opposite the aperture (711) such that, when the component (750) of the clamping device (720), which comprises the toothed structure (751) on its periphery, is rotatably rotated and is rotated by means of the interaction between the toothed structure (751) and the complementary toothed structure (741) of the clamping slide (740), is axially moved, and by these means changes the width (b) of the aperture (711) along a part of the axial path of movement.

## Revendications

1. Dispositif de chauffage électrique (100, 400, 500, 600, 700) avec une ouverture axiale pour recevoir un objet à chauffer, comprenant un élément électrique chauffant (418, 518, 718) et une gaine de serrage (110, 210, 310, 410, 510, 610, 710) en forme d'enveloppe cylindrique ou en forme de tronc de cône, pour générer une force réglable, agissant radialement selon l'axe (A) de l'ouverture axiale,
- au moins la gaine de serrage (110, 210, 310, 410, 510, 610, 710) du Dispositif de chauffage électrique (100, 400, 500, 600, 700) est traversée par au moins un évidement (111, 211, 311, 411, 511, 611, 711) dont la largeur (b) peut être modifiée par au moins un dispositif de serrage (120, 220, 320, 420, 520, 620, 720),
- au moins un composant du dispositif de serrage (120, 220, 320, 420, 520, 620, 720) est monté par rapport à la gaine de serrage (110, 210, 310, 410, 510, 610, 710) soit tournant, soit susceptible de tourner autour d'un axe de rotation (D) perpendiculaire à l'axe (A) de l'ouverture axiale,
- ce composant coopérant directement ou indirectement avec la gaine de serrage (110, 210, 310, 410, 510, 610, 710) de façon qu'une rotation du composant monté tournant ou susceptible de tourner du dispositif de serrage (120, 220, 320, 420, 520, 620, 720) modifie la largeur (b) de l'évidement (111, 211, 311, 411, 511, 611, 711),
dispositif de chauffage **caractérisé en ce que**
le composant tournant ou susceptible de tourner du dispositif de serrage (120, 220, 320, 420, 520, 620) à un disque (121, 221, 321, 421, 521, 621) avec au moins un moyen de prise (123, 223, 323, 423, 523, 623),
- le moyen de prise (123, 223, 323, 423, 523, 623) coopérant avec au moins un moyen complémentaire de prise (214, 314, 414, 514, 614) monté sur la gaine de serrage (110, 210, 310, 410, 510, 610).

2. Dispositif de chauffage électrique (100, 400, 500, 600, 700) selon la revendication 1,
**caractérisé en ce que**
soit selon une première variante, le moyen de prise (123, 223, 323, 423, 523, 623) est constitué par des reliefs et le moyen complémentaire de prise (124, 214, 314, 414, 514, 614) est constitué par des cavités notamment des rainures, des évidements ou des passages,
soit selon une seconde alternative, le moyen complémentaire de prise (124, 214, 314, 414, 514, 614) est constitué par des reliefs et le moyen de prise (123, 223, 323, 423, 523, 623) est constitué par des cavités, notamment des rainures ou des passages.

3. Dispositif de chauffage électrique (100, 400, 500, 600, 700) selon la revendication 2,
**caractérisé en ce que**
les reliefs sont des pièces fixées au disque (121, 221, 321, 421, 521, 621) ou des pièces fixées à la gaine de serrage (110, 210, 310, 410, 510, 610).

4. Dispositif de chauffage électrique (100, 400, 500, 600, 700) selon la revendication 2 ou 3,
**caractérisé en ce que**
les reliefs et les cavités sont en contact entre eux, au moins par segments avec une contre-dépouille de façon que le disque (121, 221, 321, 421, 521, 621) soit fixé.

5. Dispositif de chauffage électrique (100, 400, 500, 600, 700) selon l'une des revendications 2 à 4,
**caractérisé en ce que**
les cavités sont courbes.

6. Dispositif de chauffage électrique (100, 400, 500, 600, 700) selon la revendication 5,
**caractérisé en ce que**
la courbure des cavités varie.

7. Dispositif de chauffage électrique (100, 400, 500, 600, 700) selon l'une des revendications 2 à 6,
**caractérisé en ce que**
les cavités forment les moyens complémentaire de prise (124, 314, 414, 514, 614) prévus sur la gaine de serrage (110, 210, 310, 410, 510, 610) et passent dans une pièce fixée séparément à la gaine de serrage (110, 210, 310, 410, 510, 610, 710).

8. Dispositif de chauffage électrique (100, 400, 500, 600, 700) selon l'une des revendications 1 à 7,
**caractérisé en ce que**
le dispositif de serrage (120, 220, 320, 420, 520, 620, 720)comporte une prise d'outil (122, 222, 322, 422, 522, 622) qui est sur l'axe de rotation (D) du composant monté tournant du dispositif de serrage (120, 220, 320, 420, 520, 620, 720).

9. Dispositif de chauffage électrique (100, 300, 600) selon l'une des revendications 1 à 8,
**caractérisé en ce que**
la gaine de serrage (110, 310, 610) comporte une cavité (119, 310, 619) recevant au moins par segments le dispositif de serrage (110, 310, 610).

10. Dispositif de chauffage électrique (600) selon la revendication 1,
**caractérisé en ce que**
les moyens de prise complémentaires (614) de la gaine de serrage (610) chevauchent l'évidement (611) avec une première extrémité (614a) sur un côté de l'évidement (611), cette extrémité étant reliée à la gaine de serrage (610) et sur l'autre côté de l'évidement (611), ils comportent une seconde extrémité (614b) qui est en prise directement ou indirectement dans le disque (621) ou dans laquelle pénètre le disque (621).

11. Dispositif de chauffage électrique (100, 400, 500, 600, 700) avec une ouverture axiale pour recevoir un objet à chauffer, comprenant un élément électrique chauffant (418, 518, 718) et une gaine (110, 210, 310, 410, 510, 610, 710) en forme d'enveloppe cylindrique ou de tronc de cône, pour générer une force réglable agissant dans la direction radiale selon l'axe (A) de l'ouverture axiale,
- au moins la gaine de serrage (110, 210, 310, 410, 510, 610, 710) du dispositif de chauffage électrique (100, 400, 500, 600, 700) est traversée par au moins un évidement (111, 211, 311, 411, 511, 611, 711) dont la largeur (b) peut être modifiée par au moins un dispositif de serrage (120, 220, 320, 420, 520, 620, 720),
- au moins un composant du dispositif de serrage (120, 220, 320, 420, 520, 620, 720) étant monté tournant ou susceptible de tourner par rapport à la gaine de serrage (110, 210, 310, 410, 510, 610, 710) autour d'un axe de rotation (D) perpendiculaire à l'axe (A) de l'ouverture axiale,
- ce composant coopérant directement ou indirectement avec la gaine de serrage (110, 210, 310, 410, 510, 610, 710) de façon qu'une rotation du composant monté tournant ou susceptible de tourner du dispositif de serrage (120, 220, 320, 420, 520, 620, 720) modifie la largeur (b) de l'évidement (111, 211, 311, 411, 511, 611, 711),
dispositif **caractérisé en ce que**
- la gaine de serrage (710) comporte un palier (719) qui définit un axe de rotation (D) perpendiculaire à l'axe (A) de l'ouverture axiale de façon qu'un composant (750) du dispositif de serrage (720) qui a une structure de dents (751) à sa périphérie, puisse être monté tournant dans le palier (719),
- la gaine de serrage (710) ayant en outre un moyen de prise complémentaire (712) dont la distance par rapport à l'évidement jusqu'à sa première extrémité (712a) va en croissant vers la seconde extrémité (712b), et
le dispositif de serrage (720) comporte en outre un coulisseau de serrage (740), qui
- a un moyen de prise (743) qui est en prise avec le moyen de prise complémentaire (712) de la gaine de serrage (710),
- a une ouverture (741) parallèle à l'axe (A) de l'ouverture axiale, et qui a au moins un bord parallèle à l'axe (A) de l'ouverture axiale avec une structure de dents (741) complémentaires à la structure de dents (751) et libère le palier (719) de façon que le composant (750) soit ou puisse venir dans le palier (719),
- chevauche l'évidement (711), et
- vient en contact avec la gaine de serrage (710) ou puisse être mis en contact avec celle-ci sur le côté de l'évidement (711) opposé au moyen de prise complémentaire (712), de façon que lorsque le composant (750) du dispositif de serrage (720) et dont la périphérie porte la structure de dents (751), soit monté à rotation dans le palier (719) et soit tourné par la coopération de la structure de dents (751) avec la structure de dents complémentaires (741), le coulisseau tendeur (740) soit coulissé axialement, et
- qu'ainsi au moins sur une partie de la course de coulissement axial, la largeur (b) de l'évidement (711) soit modifié.
